# EUROPÄISCHE PATENTANMELDUNG

(11) **EP 3 128 217 A1**
(43) Veröffentlichungstag der Anmeldung: **08.02.2017**
(21) Anmeldenummer: 16182121.0
(22) Anmeldetag: 01.08.2016
(51) Int. Cl.: F16L 3/10

(54) **ROHRSCHELLE**

(30) Priorität: 06.08.2015 DE 102015112936
(71) Anmelder: fischerwerke GmbH & Co. KG, 72178 Waldachtal (DE)
(72) Erfinder: Linka, Martin, 72160 Horb a.N. (DE); Kosanke, Timo, 72202 Nagold (DE)
(74) Vertreter: Suchy, Ulrich Johannes

(57) **Zusammenfassung**

Als Rastverschluss (9) einer Rohrschelle (1) schlägt die Erfindung ein tangential verlaufendes U-Profil (10) mit Querschlitzen (11) als Rastöffnungen (22) in einer konvexen Seite an einem Schellenbügel (3) und ein schwenkbares Sperrglied (12) vor, das schwenkbar auf einem Flansch (13) eines anderen Schellenbügels (4) aufliegt und bei geschlossener Rohrschelle (1) in einen der Schlitze (11) eingreift.

## Beschreibung

Die Erfindung betrifft eine Rohrschelle mit den Merkmalen des Oberbegriffs des Anspruchs 1.

Es sind sowohl aus der Praxis als auch aus der Patentliteratur zahlreiche Rohrschellen bekannt, wobei insbesondere für den Schließmechanismus inzwischen eine große Anzahl Varianten bekannt sind. Grundsätzlich weisen diese Rohrschellen einen Schellenring zum Umgreifen eines in die Rohrschelle eingelegten Rohres auf. Der Schellenring kann einteilig sein, sehr häufig besteht er jedoch aus mindestens zwei Schellenbügeln, die gelenkig miteinander verbunden sind. Der Schellenring weist eine Öffnung zum Einlegen des Rohres an einer Stelle seines Umfangs auf. Diese Öffnung lässt sich mehr oder weniger öffnen und schließen, wobei dies bei einem einteiligen Schellenring durch dessen Elastizität und/oder Plastizität erfolgt und bei einem mehrteiligen Schellenring durch gelenkige Verbindung der Schellenbügel. Beiderseits der Öffnung weisen die bekannten Rohrschellen in etwa radial nach außen stehende Spannflansche auf. Dabei bezieht sich die Richtung "radial" auf ein gedachtes, in die Rohrschelle eingelegtes, zylindrisches Rohr. Neben Rohrschellen, die eine rastende Zusammenspannung der Spannflansche vorsehen, sind insbesondere Rohrschellen bekannt, bei denen die Spannflansche mit einer sie durchgreifenden Spannschraube zusammenspannbar sind. Durch Schließen des Schellenrings kann ein eingelegtes Rohr gegen Herausfallen, und durch Zusammenspannen der Spannflansche kann das Rohr gegen Verschiebung in seiner Längsrichtung und gegen Drehung um seine Achse gesichert werden.

Aus dem europäischen Patent EP 0 597 805 B1 ist eine Rohrschelle mit einem Schellenring bekannt, der zwei halbkreisförmige Schellenbügel aufweist, die an einer Stelle eines Umfangs des Schellenrings mit einer Spannschraube verbunden sind, die die beiden Schellenbügel schwenkbar verbindet, so dass sie zum Öffnen der Rohrschelle auseinanderschwenkbar und zum Schließen der Rohrschelle zusammenschwenkbar sind. Das Öffnen und das Schließen der Rohrschelle kann auch als Öffnen und Schließen des Schellenrings der Rohrschelle aufgefasst werden. Außerdem lassen sich mit der Spannschraube die beiden Schellenbügel zusammenziehen und dadurch um ein eingelegtes Rohr herum festspannen.

Der Spannschraube gegenüber weist die bekannte Rohrschelle einen Rastverschluss zum Schließen der Rohrschelle auf. Der Rastverschluss weist ein U-Profil auf, das mit einem der beiden Schellenbügel einstückig ist und diesen tangential verlängert. Das U-Profil ist entweder außen, also auf einer der Rohrschelle abgewandten Seite, offen und weist eine Verzahnung an beiden Seitenwangen des U-Profils, also außen, auf, oder das U-Profil ist innen, also auf einer der Rohrschelle zugewandten Seite offen und weist rechteckige Durchbrüche in einer Grundseite des U-Profils auf. Die Verzahnung oder die Durchbrüche bilden Rastöffnungen, die mit einem schwenkbaren Sperrglied zusammenwirken, das ebenfalls Teil des Rastverschlusses der Rohrschelle ist. Das Sperrglied der bekannten Rohrschelle ist scheibenförmig und liegt auf einem nach außen stehenden Flansch an einem zugeordneten Ende des anderen Schellenbügels auf. Der Flansch weist eine Öffnung für einen Durchtritt des U-Profils beim Schließen der Rohrschelle auf. Beim Schließen drückt das U-Profil das schwenkbare Sperrglied zur Seite, so dass das U-Profil am Sperrglied vorbeitreten kann, bis eine der Rastöffnungen des U-Profils in Höhe des Sperrglieds gelangt und das Sperrglied in die Rastöffnung eintritt und ein Herausziehen des U-Profils, d.h. ein Öffnen der Rohrschelle, verhindert. Die Rohrschelle ist damit geschlossen und kann mit der Spannschraube auf der gegenüberliegenden Seite des Rastverschlusses um ein eingelegtes Rohr festgespannt werden.

Aufgabe der Erfindung ist, eine Rohrschelle mit einem alternativen Rastverschluss vorzuschlagen.

Diese Aufgabe wird erfindungsgemäß durch die Merkmale des Anspruchs 1 gelöst. Die Unteransprüche haben vorteilhafte Ausgestaltungen und Weiterbildungen der Erfindung zum Gegenstand.

Die erfindungsgemäße Rohrschelle weist einen Schellenring zum Umschließen eines in die Rohrschelle eingelegten Rohres auf. Der Schellenring kann einstückig sein und sich durch elastische und/oder plastische Verformung öffnen und schließen lassen. Der Schellenring kann auch mehrere Schellenbügel, insbesondere zwei Schellenbügel aufweisen, die zum Öffnen und Schließen der Rohrschelle, was gleichbedeutend mit einem Öffnen und Schließen des Schellenrings ist, auseinander- und zusammenschwenkbar sind. An einer Stelle eines Umfangs weist der Schellenring eine Öffnung zum Einlegen des Rohres und einen Rastverschluss zum Schließen der Öffnung auf. Der Rastverschluss weist ein Hohlprofil und ein mit dem Hohlprofil zusammenwirkendes Sperrglied auf. Das Hohlprofil ist auf einer Seite der Öffnung an dem Schellenring angeordnet, erstreckt sich in tangentialer Richtung zum Schellenring und weist eine Rastöffnung auf, in die das Sperrglied bei geschlossener Rohrschelle eingreift. Das Sperrglied ist beweglich auf einer anderen Seite der Öffnung wie das Hohlprofil an dem Schellenring angeordnet und gelangt bei einem Schließen des Schellenrings in Eingriff mit der Rastöffnung, so dass es den Schellenring geschlossen hält. Erfindungsgemäß ist die Rastöffnung ein das Hohlprofil quer durchsetzender Schlitz.

Der Schellenring ist insbesondere rund, kann aber beispielsweise auch eckig sein, wobei "rund" nicht-kreisförmige Rundungen einschließt.

Im Vergleich mit einem U-Profil, das deckungsgleiche Verzahnungen in beiden Seitenwangen aufweist, ist das erfindungsgemäße Hohlprofil mit den quer durchgehenden Schlitzen stabiler, weil zwischen den Schlitzen beide Seiten des Hohlprofils verbunden sind. Ein zusätzlicher Vorteil ist eine Vermeidung nach außen stehender Zähne, die eine Verletzungsgefahr darstellen.

Insbesondere durchsetzt der die Rastöffnung bildende Schlitz einen konvexen Wandbereich des Hohlprofils.

Das Hohlprofil kann beispielsweise geschlossen, d.h. rohrförmig mit rundem oder eckigem Querschnitt sein. Eine Ausgestaltung der Erfindung sieht ein U-Profil als Hohlprofil vor, wobei auch ein solches offenes Hohlprofil einen gerundeten oder einen eckigen Querschnitt aufweisen kann.

Eine Weiterbildung der Erfindung sieht vor, dass eine offene Seite des U-Profils einem Inneren der Rohrschelle zugewandt ist und der die Rastöffnung bildende Schlitz das U-Profil auf einer der Rohrschelle abgewandten Außenseite durchsetzt. Der Schlitz geht durch eine Grundseite des U-Profils und reicht bis in dessen Seitenwangen. Diese Ausgestaltung der Erfindung ermöglicht eine mechanisch stabile Ausbildung des Hohlprofils trotz des Schlitzes und vermeidet scharfe Kanten, die eine Verletzungsgefahr darstellen würden.

In bevorzugter Ausgestaltung der Erfindung weist der Rastverschluss mehrere Rastöffnungen auf, die in einer Schließrichtung der Rohrschelle hintereinander angeordnet sind. Das ermöglicht ein unterschiedlich enges Schließen der Rohrschelle zur Anpassung an verschieden große Rohrdurchmesser bzw. Rohrquerschnitte. Ein Spannweg einer Spannschraube wird dadurch verkürzt.

Das Sperrglied kann beweglich auf der anderen Seite der Öffnung wie das Hohlprofil an dem Schellenring angeordnet sein. Eine Ausgestaltung der Erfindung sieht ein schwenkbares Sperrglied vor, das beim Schließen des Schellenrings von dem Hohlprofil zur Seite gedrückt wird, so dass das Hohlprofil an dem Sperrglied vorbeitreten und das Sperrglied durch Rückschwenken in die Rastöffnung oder eine der Rastöffnungen eintreten kann.

Eine Ausgestaltung der Erfindung sieht vor, dass das Sperrglied auf einer dem Schellenring abgewandten Außenseite des Hohlprofils schwenkbar gelagert ist.

Vorzugsweise weist der Schellenring einen nach außen stehenden Flansch auf, an dem das Sperrglied beweglich angeordnet ist und der eine Durchtrittsöffnung für das Hohlprofil beim Schließen der Rohrschelle aufweist. Bei geschlossenem Schellenring liegt das Sperrglied auf der Seite des Flansches auf, auf der das Hohlprofil beim Schließen der Rohrschelle austritt, so dass der Flansch des Schellenrings das Sperrglied gegen ein Öffnen der Rohrschelle abstützt. Erfindungsgemäß liegt das Sperrglied bei geschlossener Rohrschelle beiderseits des Hohlprofils auf dem Flansch auf. Das Sperrglied ist dadurch stabil gegen Öffnen der Rohrschelle abgestützt und wird durch die Auflage auf dem Flansch nicht auf Kippen beansprucht.

Zu einem einfachen Öffnen der Rohrschelle weist das Sperrglied bei einer Ausgestaltung der Erfindung eine Öffnungstaste auf, über die sich das Sperrglied bei geschlossener Rohrschelle durch Fingerdruck aus der Rastöffnung des Hohlprofils herausbewegen lässt, so dass die Rohrschelle geöffnet werden kann.

Die Erfindung wird nachfolgend anhand eines in der Zeichnung dargestellten Ausführungsbeispiels näher erläutert. Es zeigen:
- Figur 1: eine Rohrschelle gemäß der Erfindung in perspektivischer Darstellung; und
- Figur 2: eine vergrößerte Explosionsdarstellung eines Rastverschlusses gemäß Pfeil II in Figur 1.

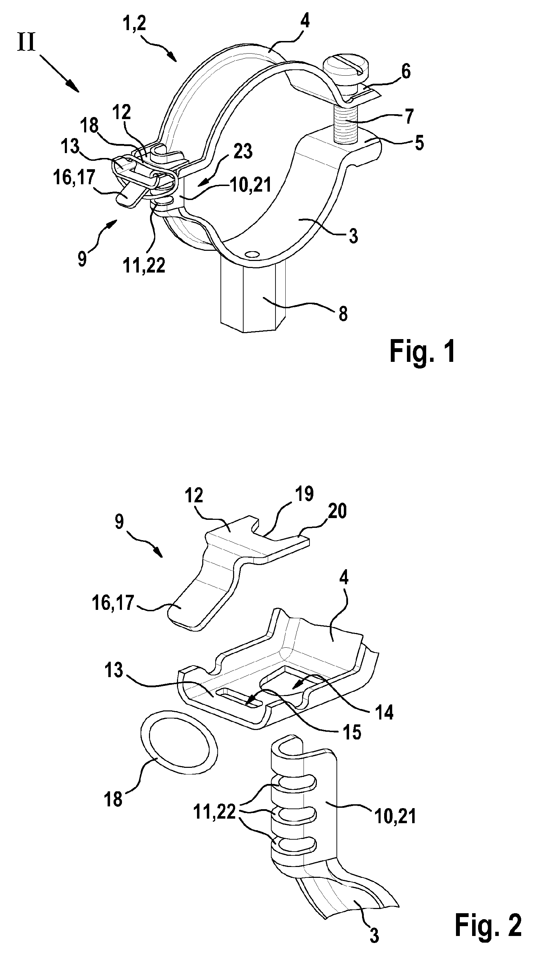

Die in Figur 1 gezeigte, erfindungsgemäße Rohrschelle 1 weist einen Schellenring 2 mit zwei in etwa halbkreisförmigen Schellenbügeln 3, 4 auf, wobei eine Kreisform des Schellenrings 2 bzw. eine Halbkreisform der Schellenbügel 3, 4 nicht zwingend für die Erfindung ist. Die Rohrschelle 1 kann auch eine andere runde Form als eine Kreisform aufweisen oder eckig sein. Die beiden Schellenbügel 3, 4 weisen auf einer Seite, d.h. an einer Stelle eines Umfangs der Rohrschelle 1, parallel zueinander und parallel zu einer Axialebene der Rohrschelle 1 nach außen stehende Flansche 5, 6 auf, an denen sie mit einer Spannschraube 7 verbunden sind. Die Spannschraube 7 ist durch ein Durchsteckloch in einem ersten der beiden Flansche 6 gesteckt und in ein Gewindeloch im anderen, zweiten Flansch 5 geschraubt. Mit der Spannschraube 7 sind die beiden Schellenbügel 3, 4 schwenkbar miteinander verbunden, sie lassen sich zum Öffnen der Rohrschelle 1 auseinanderschwenken und zum Schließen der Rohrschelle 1 zusammenschwenken in eine in Figur 1 gezeigte geschlossene Stellung der Rohrschelle 1. Außerdem lassen sich die beiden Schellenbügel 3, 4 mit der Spannschraube 7 um ein nicht gezeichnetes, in die Rohrschelle 1 eingelegtes Rohr festspannen bzw. das Rohr in der Rohrschelle 1 festspannen.

Ein erster der beiden Schellenbügel 3 weist zur Befestigung der Rohrschelle 1 an beispielsweise einer Wand in seiner Mitte eine nach außen abstehende Befestigungsmutter 8 auf. Anstelle der Befestigungsmutter 8 kann der erste Schellenbügel 3 beispielsweise auch einen Gewindeschaft aufweisen (nicht dargestellt). Dem ersten und zweiten Flansch 5, 6 gegenüber weist die Rohrschelle 1 bzw. der Schellenring 2 einen Rastverschluss 9 zu einem Geschlossenhalten des Schellenrings 2 auf, was gleichbedeutend mit einem Geschlossenhalten der Rohrschelle 1 ist. Der Rastverschluss 9 umfasst ein U-Profil 10, das den ersten Schellenbügel 3 in tangentialer Richtung verlängert und das erste Schlitze 11 aufweist, und ein Sperrglied 12, das beweglich am zweiten Schellenbügel 4 angeordnet ist und mit dem U-Profil 10 zusammenwirkt, nämlich bei geschlossener Rohrschelle 1 in die ersten Schlitze 11 eingreift. Eine offene Seite des U-Profils 10 ist einem Inneren des Schellenrings 2 zugewandt und demgemäß eine geschlossene- oder Jochseite des U-Profils 10 nach außen gerichtet. Die ersten Schlitze 11 durchsetzen die geschlossene Seite des U-Profils 10 quer, nämlich in zu einer Axialebene der Rohrschelle 1 parallelen Ebene. Die ersten Schlitze 11 durchsetzen eine Grundseite bzw. Jochwand des U-Profils 10 und reichen bis in Seitenwangen des U-Profils 10. Die die Rastöffnungen 22 bildenden ersten Schlitze 11 durchsetzen also einen konvexen Wandbereich des U-Profils 10. Im Ausführungsbeispiel weist das U-Profil 10 des Rastverschlusses 9 mehrere, nämlich drei erste Schlitze 11 auf, die in Längsrichtung des U-Profils 10, die zugleich eine Schließrichtung der Rohrschelle 1 ist, hintereinander angeordnet sind. Das U-Profil 10 kann allgemein auch als Hohlprofil 21 aufgefasst werden, anstelle des U-Profils 10 sind auch andere Hohlprofile 21, beispielsweise auch geschlossene oder offene Rohrprofile möglich (nicht dargestellt).

Das Sperrglied 12 ist im Ausführungsbeispiel eine Scheibe, die beweglich, im Ausführungsbeispiel schwenkbar, auf einem dritten Flansch 13 angeordnet ist, der vom zweiten Schellenbügel 4 parallel zu einer Axialebene der Rohrschelle 1 nach außen absteht. Der dritte Flansch 13 weist eine Durchtrittsöffnung 14 für das U-Profil 10 auf, die in etwa eine Form eines Umrisses des U-Profils 10 aufweist und so groß wie oder etwas größer als der Umriss des U-Profils 10 ist. Auf einer dem Schellenring 2 abgewandten Seite der Durchtrittsöffnung 14 weist der dritte Flansch 13 einen zweiten Schlitz 15 auf, den eine Lasche 16 des Sperrglieds 12 durchgreift. Die Lasche 16 ist vom Sperrglied 12 zunächst rechtwinklig abgewinkelt und anschließend, nach dem Durchgriff des zweiten Schlitzes 15, um etwa 45° in entgegengesetzter Richtung abgewinkelt, so dass sie als Öffnungstaste 17 schräg nach außen steht. Mittels des Durchgriffs der Lasche 16 durch den zweiten Schlitz 15 im dritten Flansch 13 ist das Sperrglied 12 schwenkbar mit dem dritten Flansch 13 und über diesen mit dem zweiten Schellenbügel 4 verbunden, der Teil des Schellenrings 2 der Rohrschelle 1 ist. Grundsätzlich ist auch eine andere Bewegungsmöglichkeit als eine Schwenkbarkeit des Sperrglieds 12 möglich, beispielsweise kann das Sperrglied 12 verschiebbar sein (nicht dargestellt).

Das Sperrglied 12 ist auf einer Seite des dritten Flansches 13 angeordnet, auf der das U-Profil 10 bei einem Schließen der Rohrschelle 1 aus der Durchtrittsöffnung 14 des dritten Flansches 13 austritt. Ein um den dritten Flansch 13 und das Sperrglied 12 gespannter Gummiring 18 beaufschlagt das Sperrglied 12 in Anlage auf den dritten Flansch 13. In der gezeichneten, geschlossenen Stellung der Rohrschelle 1 liegt das Sperrglied 12 auf dem dritten Flansch 13 des anderen Schellenbügels 4 auf und greift mit einem Rand 19 in einen der ersten Schlitze 11 des U-Profils 10 ein, das den ersten Schellenbügel 3 tangential verlängert und in der geschlossenen Stellung der Rohrschelle 1 die Durchtrittsöffnung 14 im dritten Flansch 13 des zweiten Schellenbügels 4 durchgreift. Das Sperrglied 12 sperrt das U-Profil 10 gegen ein Herausziehen aus der Durchtrittsöffnung 14 in einer Öffnungsrichtung der Rohrschelle 1 und hält die Rohrschelle 1 dadurch geschlossen. Das Sperrglied 12 ist breiter als die Durchtrittsöffnung 14 und es setzt sich mit Vorsprüngen 20 über den Rand 19 hinweg fort, so dass es auf allen Seiten außerhalb des U-Profils 10 auf dem dritten Flansch 13 aufliegt und sich dadurch stabil gegen ein Öffnen der Rohrschelle 1 auf dem dritten Flansch 13 abstützt. Durch die Auflage des Sperrglieds 12 auf allen Seiten des U-Profils 10 auf dem dritten Flansch 13 bewirkt eine Kraft in einem Öffnungssinn der Rohrschelle 1 kein Moment am Sperrglied 12.

Der Schellenring 2 weist dem ersten und zweiten Flansch 5, 6 gegenüber eine Öffnung 23 auf, die bei geschlossener Rohrschelle 1 von dem U-Profil 10 verschlossen ist, der Teil des Rastverschlusses 9 der Rohrschelle 1 ist. Zu einem Öffnen der Rohrschelle 1 wird durch einen Fingerdruck gegen die Öffnungstaste 17 des Sperrglieds 12 das Sperrglied 12 gegen eine elastische Kraft des Gummirings 18 verschwenkt und dadurch vom dritten Flansch 13 abgehoben. Dabei kommt das Sperrglied 12 aus dem ersten Schlitz 11 des U-Profils 10 frei und die beiden Schellenbügel 3, 4 können zum Öffnen der Rohrschelle 1 auseinandergeschwenkt werden. Beispielsweise ein nicht gezeichnetes Rohr kann durch die dadurch entstandene Öffnung 23 in die Rohrschelle 1 bzw. den Schellenring 2 eingelegt werden. Anschließend werden zum Schließen der Rohrschelle 1 die beiden Schellenbügel 3, 4 wieder zusammengeschwenkt, so dass das U-Profil 10 durch die Durchtrittsöffnung 14 im dritten Flansch 13 durchtritt. Beim Austritt aus der Durchtrittsöffnung 14 drückt das U-Profil 10 das Sperrglied 12 gegen die elastische Kraft des Gummirings 18 zur Seite, so dass das U-Profil 10 am Sperrglied 12 vorbeitreten kann. Gelangt das Sperrglied 12 in einen der ersten Schlitze 11 im U-Profil 10, tritt es in diesen ein und sperrt das U-Profil 10 gegen ein Zurückziehen und hält damit die Rohrschelle 1 geschlossen. Die ersten Schlitze 11 können allgemein auch als Rastöffnungen 22 aufgefasst werden, der Gummiring 18 kann allgemein auch als Federelement aufgefasst werden, das das Sperrglied 12 elastisch in Auflage auf den dritten Flansch 13, also in eine Sperrstellung beaufschlagt, in der das Sperrglied 12 in einen der ersten Schlitze 11 eingreift und das U-Profil 10 gegen ein Herausziehen aus der Durchtrittsöffnung 14 in einer Öffnungsrichtung der Rohrschelle 1 sperrt. Die beiden Schellenbügel 3, 4 werden so weit zusammengedrückt, bis sie an dem nicht gezeichneten, in die Rohrschelle 1 eingelegten Rohr anliegen. Abhängig von einem Durchmesser des Rohrs gelangt das Sperrglied 12 dabei in Eingriff in einen der ersten Schlitze 11. Durch die in der Schließrichtung hintereinander angeordneten ersten Schlitze 11 lassen sich die beiden Schellenbügel 3, 4 verschieden eng zusammenbringen und der Schellenring 2 verschieden weit schließen. Im Ausführungsbeispiel ist das Sperrglied 12 auf einer dem Schellenring 2 abgewandten Außenseite des U-Profils 10 schwenkbar am dritten Flansch 13 des zweiten Schellenbügels 4 angeordnet, was allerdings nicht zwingend für die Erfindung ist.

Eine tangentiale Ausrichtung des U-Profils 10 ist nicht zwingend für die Erfindung, das U-Profil 10 kann auch in einer Umfangsrichtung der Rohrschelle 1 oder allgemein so verlaufen, dass das U-Profil 10 beim Schließen der Rohrschelle 1 durch die Durchtrittsöffnung 14 durchtritt.

### Bezugszeichenliste

### Rohrschelle

- 1: Rohrschelle
- 2: Schellenring
- 3: erster Schellenbügel
- 4: zweiter Schellenbügel
- 5: erster Flansch
- 6: zweiter Flansch
- 7: Spannschraube
- 8: Befestigungsmutter
- 9: Rastverschluss
- 10: U-Profil
- 11: erster Schlitz
- 12: Sperrglied
- 13: dritter Flansch
- 14: Durchtrittsöffnung
- 15: zweiter Schlitz
- 16: Lasche
- 17: Öffnungstaste
- 18: Gummiring
- 19: Rand
- 20: Vorsprung
- 21: Hohlprofil
- 22: Rastöffnung
- 23: Öffnung

## Patentansprüche

1. Rohrschelle mit einem Schellenring (2) zum Umschließen eines in die Rohrschelle (1) eingelegten Rohres, wobei der Schellenring (2) eine Öffnung (23) zum Einlegen des Rohres an einer Stelle seines Umfangs und einen Rastverschluss (9) zum Schließen der Öffnung (23) aufweist, wobei der Rastverschluss (9) ein Hohlprofil (21), das auf einer Seite der Öffnung (23) an dem Schellenring (2) angeordnet ist, sich in tangentialer Richtung zum Schellenring (2) erstreckt und eine Rastöffnung (22) aufweist, und ein Sperrglied (12), das beweglich auf einer anderen Seite der Öffnung (23) des Schellenrings (2) angeordnet ist und das bei einem Schließen des Schellenrings (2) mit der Rastöffnung (22) in Eingriff gelangt und den Schellenring (2) geschlossen hält, aufweist, **dadurch gekennzeichnet, dass** die Rastöffnung (22) ein das Hohlprofil (21) quer durchsetzender Schlitz (11) ist.

2. Rohrschelle nach Anspruch 1, **dadurch gekennzeichnet, dass** der die Rastöffnung (22) bildende Schlitz (11) einen konvexen Wandbereich des Hohlprofils (21) durchsetzt.

3. Rohrschelle nach Anspruch 1 oder 2, **dadurch gekennzeichnet, dass** das Hohlprofil (21) ein U-Profil (10) ist.

4. Rohrschelle nach Anspruch 3, **dadurch gekennzeichnet, dass** eine offene Seite des U-Profils (10) einem Inneren der Rohrschelle (1) zugewandt und der die Rastöffnung (22) bildende Schlitz (11) das U-Profil (10) auf einer Außenseite der Rohrschelle (1) durchsetzt.

5. Rohrschelle einem der Ansprüche 1-4, **dadurch gekennzeichnet, dass** der Rastverschluss (9) mehrere in einer Schließrichtung der Rohrschelle (1) hintereinander angeordnete Rastöffnungen (22) aufweist.

6. Rohrschelle nach einem der Ansprüche 1-5, **dadurch gekennzeichnet, dass** das Sperrglied (12) schwenkbar auf der einen Seite der Öffnung (23) an dem Schellenring (2) angeordnet ist und bei einem Schließen des Schellenrings (2) von dem Hohlprofil (21) zur Seite gedrückt wird.

7. Rohrschelle nach Anspruch 6, **dadurch gekennzeichnet, dass** das Sperrglied (12) auf einer Außenseite des Hohlprofils (21) schwenkbar an dem Schellenring (2) angeordnet ist.

8. Rohrschelle nach einem der vorhergehenden Ansprüche, **dadurch gekennzeichnet, dass** der Schellenring (2) einen nach außen stehenden Flansch (13) an der anderen Seite der Öffnung (23) des Schellenrings (2) aufweist, auf dessen der einen Seite des Schellenrings (2) abgewandter Seite der Öffnung (23) des Schellenrings (2) das Sperrglied (12) bei geschlossener Rohrschelle (1) beiderseits des Hohlprofils (21) aufliegt.

9. Rohrschelle nach einem der vorhergehenden Ansprüche, **dadurch gekennzeichnet, dass** das Sperrglied (12) eine Öffnungstaste (17) aufweist, an der sich das Sperrglied (12) zum Öffnen der Rohrschelle (1) bei geschlossener Rohrschelle (1) durch Fingerdruck aus der Rastöffnung (22) herausbewegen lässt.
